# EUROPÄISCHE PATENTSCHRIFT

(11) **EP 3 167 249 B1**
(45) Veröffentlichungstag und Bekanntmachung des Hinweises auf die Patenterteilung: **15.03.2023**
(21) Anmeldenummer: 15788333.1
(22) Anmeldetag: 15.07.2015
(51) Int. Cl.: G01D 5/245, G01D 11/24

(54) **NEUTRALTEIL FÜR EINEN KUNDENSPEZIFISCH ADAPTIERBAREN SENSOR**
NEUTRAL PART FOR A CLIENT-SPECIFIC ADAPTABLE SENSOR
PARTIE NEUTRE D'UN DÉTECTEUR ADAPTABLE SPÉCIFIQUEMENT AU CLIENT

(43) Veröffentlichungstag der Anmeldung: 17.05.2017
(73) Patentinhaber: Continental Automotive Technologies GmbH, 30165 Hannover (DE)
(72) Erfinder: SCHILLINGER, Jakob, 85080 Gaimersheim (DE); HUBER, Dietmar, 63322 Rödermark (DE); BIEBRICHER, Lothar, 61440 Oberursel (DE)
(74) Vertreter: Continental Corporation
(86) Internationale Anmeldenummer: PCT/EP2015/066160
(87) Internationale Veröffentlichungsnummer: WO 2016/005608

(56) Entgegenhaltungen:
- EP-A2- 0 282 967
- DE-A1- 19 504 608
- DE-A1-102013 202 212
- US-A- 6 034 421
- US-A1- 2004 118 227
- US-A1- 2013 154 626

## Beschreibung

Die Erfindung betrifft ein Verfahren zum Herstellen einer Sensorschaltung und die Sensorschaltung.

Aus der WO 2010 / 037 810 A1 ist ein Sensor mit einer Sensorschaltung bekannt, die bei der Herstellung des Sensors auf einem Basiselement genannten Verdrahtungsträger verschaltet wird. Bei der Herstellung der Sensorschaltung ist der Verdrahtungsträger in einem Band genannten Halterahmen gehalten und bildet mit diesem einstückig einen sogenannten Leadframe aus. DE 10 2013 202212 A1 offenbart einen Sensor mit einem Schaltungsträger, auf dessen Bestückungsinsel ein Sensorelement und ein ASIC angeordnet sind und in ein erstes Gehäuse aus Duroplast eingebettet sind, wobei das erste Gehäuse sowie die Kontaktanschlüsse teilweise in einer zweiten Schutzmasse aus Overmold eingehüllt sind.

Druckschrift US 20130154626 A1 offenbart einen Drehzahlsensor, wobei eine Signalverarbeitungsschaltung und ein Sensorelement in ein erstes Gehäuse eingebettet sind und eine Kabelanbindung ebenfalls in dieses erste Gehäuse eingebettet ist. Außerdem weist der Drehzahlsensor ein zweites Gehäuse auf, welches das erste Gehäuse teilweise einhüllt und welches eine Befestigungseinrichtung aufweist.

Es ist Aufgabe der Erfindung, einen Sensor und ein Herstellungsverfahren zum Herstellen des Sensors vorzuschlagen, wobei der Sensor einen relativ robusten Aufbau und eine kundenspezifisch angepasste Befestigung aufweist.

Die Aufgabe wird durch das Verfahren gemäß Anspruch 1 sowie durch den Sensor gemäß Anspruch 2 gelöst.

Gemäß einem Aspekt der Erfindung umfasst ein Verfahren zum Herstellen eines Sensors mit einem Schaltungsträger, der eine eine Sensorschaltung zur Ausgabe eines von einem physikalischen Geberfeld abhängigen Sensorsignals tragende Bestückinsel und eine mit der Bestückinsel elektrisch verbundene Schnittstelle zum Senden des Sensorsignals an eine übergeordnete Signalverarbeitungseinrichtung aufweist, die Schritte Einhüllen eines die Bestückinsel und die Sensorschaltung enthaltenen Teils des Schaltungsträgers in einer ersten Schutzmasse, Anschließen eines Signalübertragungselementes an die Schnittstelle und Einhüllen wenigstens eines Teils der ersten Schutzmasse und der Schnittstelle mit wenigstens einem Teil des daran angeschlossenen Signalübertragungselementes in einer zweiten Schutzmasse.

Dem angegebenen Verfahren liegt die Überlegung zugrunde, dass der Sensor eine mechanische Schnittstelle aufweisen muss, um den Sensor an einen übergeordneten Sensorträger, wie beispielsweise ein Fahrzeug zu befestigen. Daneben benötigt der Sensor auch eine elektrische Schnittstelle, um das Sensorsignal von der Sensorschaltung in das Signalübertragungselement einzuspeisen, das das Sensorsignal an eine übergeordnete Signalverarbeitungsschaltung, wie beispielsweise an eine Motorsteuerung des zuvor genannten Fahrzeuges überträgt. Die mechanische Schnittstelle wird in der Regel in einer die elektrische Schnittstelle und die Sensorschaltung vor mechanischen Beanspruchungen und anderen Einflüssen, wie beispielsweise Verwitterung schützenden Schutzmasse ausgebildet, um den Sensor mit möglichst wenigen Herstellungsschritten zu fertigen.

Dem angegebenen Verfahren liegt ferner die Überlegung zugrunde, dass die mechanische Schnittstelle in der Regel kundenspezifisch ausgebildet werden muss, weil der Bauraum des übergeordneten Sensorträgers, wie das zuvor genannte Fahrzeug, von den Vorgaben des Kunden abhängig ist. Sensoren, die daher in übergeordneten Sensorträgern mit geringer Stückzahl verbaut werden sollen können daher nur schwer in Massenproduktion gefertigt werden.

Hier greift das angegebene Verfahren mit der Überlegung an, das Einhausen der elektrischen Schnittstelle zur Sensorschaltung in eine Schutzmasse und das Ausbilden einer mechanischen Schnittstelle in der Schutzmasse zu trennen. Auf diese Weise kann zunächst ein Neutralteil für den Sensor gefertigt werden, in dem die elektrische Schnittstelle mit einer Schutzmasse geschützt wird. Auf diese Weise ist das Neutralteil für den Sensor transportfähig und kann dann an eine Produktionsstätte transportiert werden, an der das Neutralteil für den Sensor in eine kundenspezifisch auf den jeweiligen Bauraum adaptierte Form gebracht werden kann.

Das Neutralteil selbst kann dafür unabhängig von der kundenspezifischen Form in Massenfertigung kostengünstig hergestellt werden. Erst in einem sehr späten Stadium der Herstellung braucht der Sensor dann mit der kundenspezifischen mechanischen Schnittstelle in einer Sonderfertigung auf kostenintensivere Weise an den kundenspezifischen Bauraum angepasst werden.

Das Signalverarbeitungselement kann beliebig beispielsweise auch als Antenne zur drahtlosen Übertragung des Sensorsignals ausgebildet sein. Erfindungsgemäß ist das Signalübertragungselement jedoch ein Kabel. Hier ist das angegebene Verfahren besonders günstig, weil Kabel in der Regel die elektrische Schnittstelle in ungeschützter Weise stark beanspruchen. Mit dem angegebenen Verfahren, im Rahmen dessen zunächst erst das Neutralteil gefertigt wird, in dem die elektrische Schnittstelle in der Schutzmasse geschützt ist, kann der Sensor in diesem Zwischenproduktionsstand selbst dann problemlos transportiert werden, wenn als Übertragungselement ein Kabel ist.

Nachdem das Neutralteil im Rahmen des angegebenen Sensors gefertigt ist, kann das Neutralteil in einer Weiterbildung des angegebenen Verfahrens an einen weiteren Produktionsstandort transportiert werden wobei dort wenigstens ein Teil der zweiten Schutzmasse in einer dritten Schutzmasse eingehüllt wird.

Diese dritte Schutzmasse kann dann erfindungsgemäß in einer besonderen Weiterbildung mit einem Befestigungsabschnitt als mechanische Schnittstelle zum Befestigen des Sensors an dem bereits erwähnten Sensorträger ausgebildet werden.

Der Befestigungsabschnitt umfasstdabeieine Hülse, die radial von der dritten Schutzmasse eingehüllt wird.

Gemäß einem weiteren Aspekt der Erfindung ist ein Sensor durch eines der angegebenen Verfahren hergestellt.

Der angegebene Sensor kann ein Raddrehzahlsensor oder ein Inertialsensor für ein Fahrzeug sein.

Gemäß einem weiteren Aspekt der Erfindung umfasst ein Fahrzeug einen angegebenen Sensor.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines Fahrzeuges mit einer Fahrdynamikregelung,
Fig. 2 eine schematische Darstellung eines Drehzahlsensors in dem Fahrzeug der Fig. 1,
Fig. 3 eine schematische Darstellung eines Lesekopfes des Drehzahlsensors der Fig. 2 in einem ersten Zwischenproduktionszustand,
Fig. 4 eine schematische Darstellung des Lesekopfes des Drehzahlsensors der Fig. 2 in einem zweiten Zwischenproduktionszustand,
Fig. 5 eine schematische Darstellung des Lesekopfes des Drehzahlsensors der Fig. 2 in einem dritten Zwischenproduktionszustand,
Fig. 6 eine schematische Darstellung des Lesekopfes des Drehzahlsensors der Fig. 2 in einem vierten Zwischenproduktionszustand,
Fig. 7 eine schematische Darstellung des Lesekopfes des Drehzahlsensors der Fig. 2 in einem fünften Zwischenproduktionszustand
Fig. 8 eine schematische Darstellung des Lesekopfes des Drehzahlsensors der Fig. 2 in einem sechsten Zwischenproduktionszustand
Fig. 9 eine schematische Darstellung des Lesekopfes des Drehzahlsensors der Fig. 2 in einem siebten Zwischenproduktionszustand, und
Fig. 10 eine schematische Darstellung des Lesekopfes des Drehzahlsensors der Fig. 2 in einem siebten Zwischenproduktionszustand zeigen.

In den Figuren werden gleiche technische Elemente mit gleichen Bezugszeichen versehen und nur einmal beschrieben.

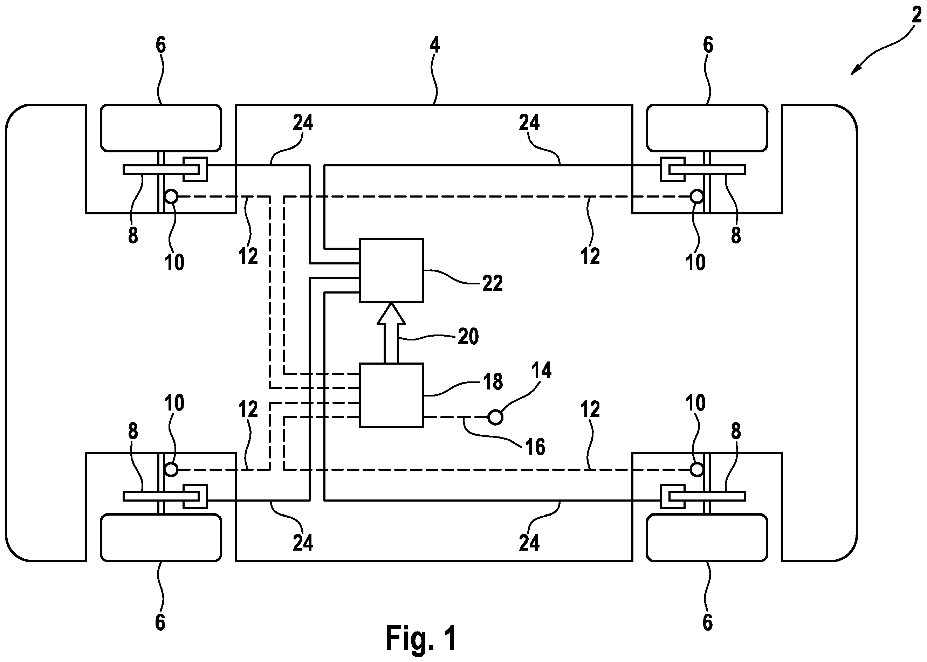

Es wird auf Fig. 1 Bezug genommen, die eine schematische Ansicht eines Fahrzeuges 2 mit einer an sich bekannten Fahrdynamikregelung zeigt. Details zu dieser Fahrdynamikregelung können beispielsweise der DE 10 2011 080 789 A1 entnommen werden.

Das Fahrzeug 2 umfasst ein Chassis 4 und vier Räder 6. Jedes Rad 6 kann über eine ortsfest am Chassis 4 befestigte Bremse 8 gegenüber dem Chassis 4 verlangsamt werden, um eine Bewegung des Fahrzeuges 2 auf einer nicht weiter dargestellten Straße zu verlangsamen.

Dabei kann es in einer dem Fachmann bekannten Weise passieren, dass das die Räder 6 des Fahrzeugs 2 ihre Bodenhaftung verlieren und sich das Fahrzeug 2 sogar von einer beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden.

In der vorliegenden Ausführung weist das Fahrzeug 2 dafür Drehzahlsensoren 10 an den Rädern 6 auf, die eine Dreh-zahl 12 der Räder 6 erfassen. Ferner weist das Fahrzeug 2 einen Inertialsensor 14 auf, der Fahrdynamidaten 16 des Fahrzeuges 2 erfasst aus denen beispielsweise eine Nickrate, eine Wankrate, eine Gierrate, eine Querbeschleunigung, eine Längsbeschleunigung und/oder eine Vertikalbeschleunigung in einer dem Fachmann an sich bekannten Weise ausgegeben werden kann.

Basierend auf den erfassten Drehzahlen 12 und Fahrdynamikdaten 16 kann ein Regler 18 in einer dem Fachmann bekannten Weise bestimmen, ob das Fahrzeug 2 auf der Fahrbahn rutscht oder sogar von der oben genannten vorgegebenen Trajektorie abweicht und entsprechen mit einem an sich bekannten Reglerausgangssignal 20 darauf reagieren. Das Reglerausgangssignal 20 kann dann von einer Stelleinrichtung 22 verwendet werden, um mittels Stellsignalen 24 Stellglieder, wie die Bremsen 8 anzusteuern, die auf das Rutschen und die Abweichung von der vorgegebenen Trajektorie in an sich bekannter Weise reagieren.

Der Regler 18 kann beispielsweise in eine an sich bekannte Motorsteuerung des Fahrzeuges 2 integriert sein. Auch können der Regler 18 und die Stelleinrichtung 22 als eine gemeinsame Regeleinrichtung ausgebildet und optional in die zuvor genannte Motorsteuerung integriert sein.

Anhand des in Fig. 1 gezeigten Raddrehzahlsensors 10 soll die vorliegende Erfindung näher verdeutlicht werden, auch wenn die vorliegende Erfindung an beliebigen Sensoren, wie Magnetfeldsensoren, Beschleunigungssensoren, Drehratensensoren, Körperschallsensoren oder Temperatursensoren umsetzbar ist.

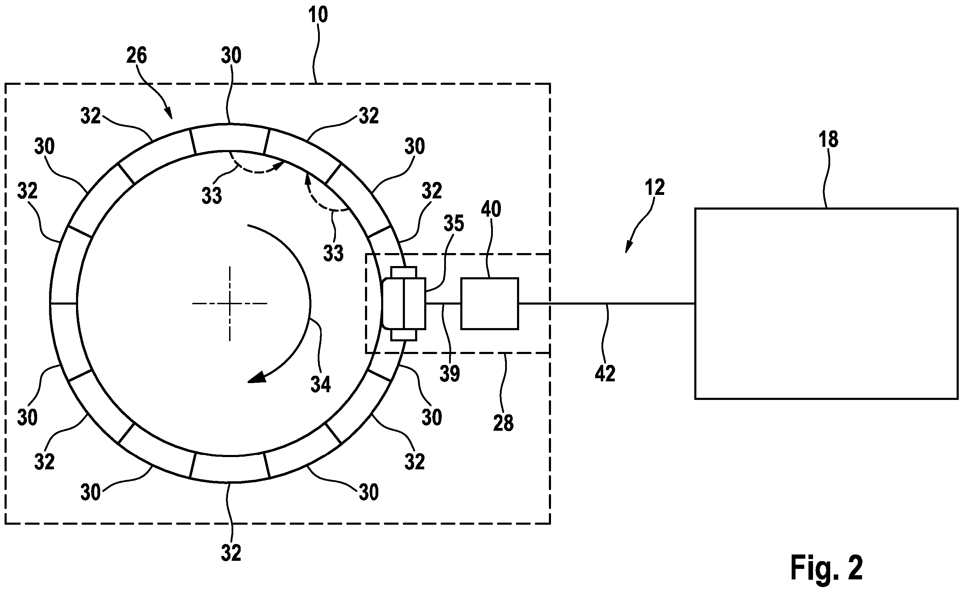

Es wird auf Fig. 2 Bezug genommen, die eine schematische Ansicht einer der Drehzahlsensoren 10 in der Fahrdynamikregelung der Fig. 1 zeigt.

Der Drehzahlsensor 10 ist in der vorliegenden Ausführung als aktiver Drehzahlsensor ausgeführt, der ein drehfest am Rad 6 befestigtes Geberelement in Form einer Encodersscheibe 26 und eine ortsfest zum Chassis 4 befestige Sensorschaltung umfasst, die nachstehend der Einfachheit halber Lesekopf 28 genannt wird.

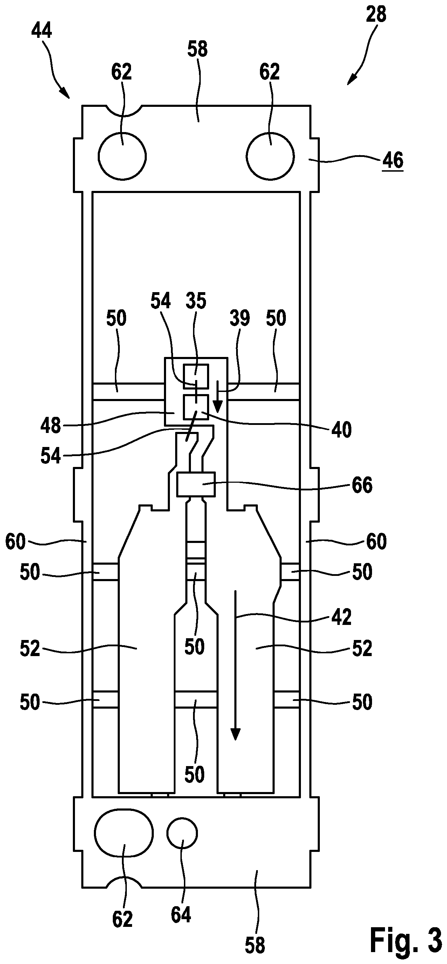

Die Encoderscheibe 26 besteht in der vorliegenden Ausführung aus aneinandergereihten Magnetnordpolen 30 und Magnetsüdpolen 32, die gemeinsam ein physikalisches Feld in Form eines Gebermagnetfeldes 33 erregen. Dieses Gebermagnetfeld ist in Fig. 3 der Übersichtlichkeit halber mit zwei gestrichelt dargestellten Feldlinien angedeutet. Dreht sich die am Rad 6 befestigte Encoderscheibe 26 mit diesem in eine Drehrichtung 34, dreht sich das Gebermagnetfeld so mit.

Der Lesekopf 28 umfasst in der vorliegenden Ausführung einen Messfühler, auch Messaufnehmer genannt, in Form eines magnetoresistiven Elementes 35. Das magnetorstriktive Element 35 ändert in Abhängigkeit der Winkellage des vom Encoderrad 26 erregten Gebermagnetfeldes 33 seinen elektrischen Widerstand. Zur Erfassung der Drehzahl 12 wird an das magnetoresisitv Element 35 ein Probesignal 39 angelegt, das in Abhängigkeit der Winkellage des Encoderrades 26 und damit des elektrischen Widerstandes magnetoresisitv Elementes 35 verändert wird. Basierend auf dieser Veränderung des Probesignals 39 wertet eine Signalauswerteschaltung 40 die Drehzahl 12 aus und gibt sie in einem Datensignal 42 an den Regler 18 aus. Diese Signalauswerteschaltung 40 kann als ASIC genannte Anwendungsspezifische integrierte Schaltung ausgebildet ebenfalls Teil des Lesekopfes 28 sein. Anstelle des magnetoresistiven Elementes 35 kann aber zur Erfassung des sich drehenden Gebermagnetfeldes 33 jeder beliebige Messaufnehmer verwendet werden, der in der Lage ist, in Abhängigkeit eines Magnetfeldes ein Signal auszugeben, so beispielsweise auch ein Hall-Element.

Hierzu und zu weiteren Hintergrundinformationen zu aktiven Raddrehzahlsensoren wird auf den einschlägigen Stand der Technik, wie beispielsweise die DE 101 46 949 A1 verwiesen.

Es wird auf Fig. 3 Bezug genommen, die eine schematische Darstellung des Lesekopfes 28 für den Drehzahlsensor 10 in einem ersten Zwischenproduktionszustand zeigt.

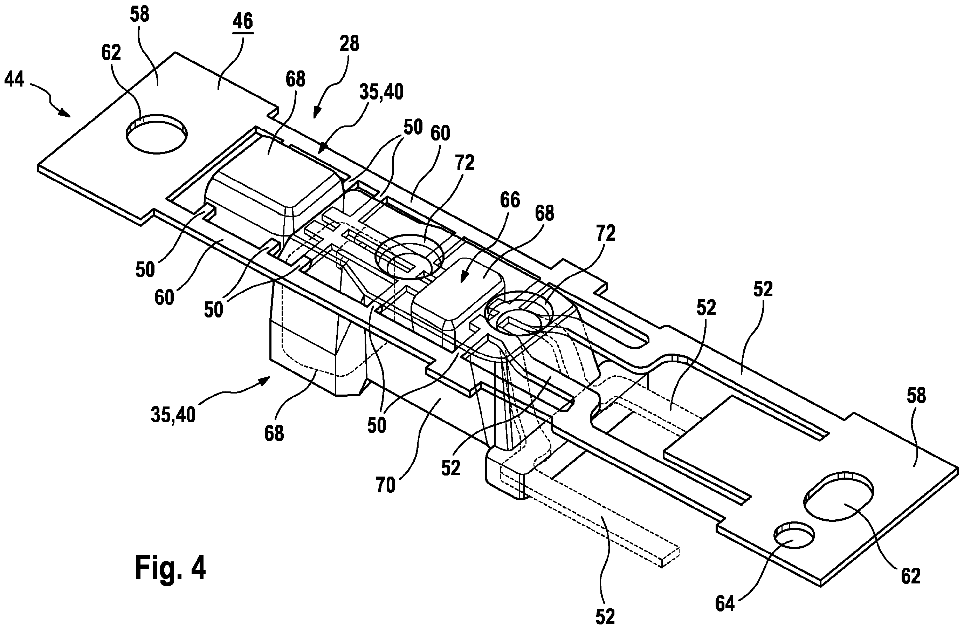

Der Lesekopf 28 der vorliegenden Ausführung ist auf einem als sogenannter Leadframe 44 ausgeführten Schaltungsträger gehalten. Von diesem Leadframe 44 ist in Fig. 3 nur ein Teil gezeigt. Der Leadframe 44 kann besonders bevorzugt als Endlosband ausgeführt sein, an den sich der in Fig. 3 Teil gezeigte des Leadframes 44 nebeneinander und/oder übereinander anschließt. Ein Beispiel dafür ist in Fig. 4 gezeigt.

Der in Fig. 3 gezeigte Teil des Leadframes 44 umfasst einen Halterahmen 46, einen Verdrahtungsträger in Form einer Bestückinsel 48, auf der der Lesekopf 28 gehalten und verschaltet ist, zwei Tiebars 50 genannte Stege und zwei Kontaktanschlüsse 52. Dabei halten die Tiebars 50 die Kontaktanschlüsse 52 direkt und die Bestückinsel 48 am Halterahmen 46. In dem Leadframe 44 sind der Halterahmen 46, die Bestückinsel 48, die Tiebars 50 und die Kontaktanschlüsse 52 als einstückiges Stanzteil oder Stanzrahmen ausgebildet, in dem die zuvor genannten Elemente durch Stanzen aus einem elektrisch leitfähigen Blech geformt werden.

Auf der Bestückinsel 48 wird im Rahmen der vorliegenden Ausführung der Messaufnehmer in Form des magnetoresisitven Elementes 35 und die Signalauswerteschaltung 40 aufgebracht und elektrisch beispielsweise durch Löten oder Verkleben kontaktiert. Das magnetoresistive Element 35 und die Signalauswerteschaltung 40 sind dabei ferner über einen Bonddraht 54 miteinander verbunden, so dass über die Bestückinsel 48 und den Bonddraht 54 zwischen dem magnetoresisitven Element 35 und der Signalauswerteschaltung 40 das Probesignal 39 übertragen werden kann.

Die Bestückinsel 48 ist in der vorliegenden Ausführung direkt mit einem der beiden Kontaktanschlüsse 52 verbunden, während der andere der beiden Kontaktanschlüsse 52 von der Bestückinsel 48 galvanisch getrennt und mit der Signalauswerteschaltung 40 über einen weiteren Bonddraht 54 verbunden ist. Auf diese Weise kann über die beiden Kontaktanschlüsse 56 das Datensignal 42 aus der Signalauswerteschaltung 40 ausgegeben werden. Zur Filterung von unerwünschten Fremdsignalen aus und/oder in den Lesekopf 28 kann zwischen den Kontaktanschlüssen 52 ein passives Filterbauelement 66 verschaltet werden. Je nach Art des Sensors und nach Anzahl der Kontaktanschlüsse 52 können auch mehrere passive Filterbauelemente 66 verschaltet werden.

Der Halterahmen 46 weist im Rahmen der vorliegenden Ausführung zwei parallel zueinander verlaufende Transportsteifen 58 auf, die über Verbindungsstege 60 miteinander verbunden sind. Auf dem Transportstreifen 58 sind dabei Transportlöcher 62 ausgebildet, in die ein nicht weiter dargestelltes Transportwerkzeug eingreifen und den Leadframe 44 bewegen kann. Ferner ist auf dem Transportstreifen 58 ein Indexloch 64 ausgebildet, mittels dem die Lage des Leadframes 44 beim Transport bestimmt und damit geregelt werden kann.

In nicht weiter dargestellter Weise kann ein Teil des Leadframes 44 als Schutzblech ausgeführt werden. Dieses Schutzblech könnte zur Wärmeisolierung des Lesekopfes 28 während des später noch zu beschreibenden Einhausungsvorgangs, als mechanische Befestigungsfläche für den Lesekopf 28 (mittels Kleber), als Druck-Widerlager für den Lesekopf 28 während des später noch zu beschreibenden Einhausungsvorgangs, als Wärmeableitschild im Betrieb und als EMV-Schild für den Lesekopf 28 verwendet werden.

Es wird auf Fig. 4 Bezug genommen, die einen weiteren Zwischenproduktionszustand des Lesekopfes 28 nach dem Zwischenproduktionszustand der Fig. 3 zeigt. Die Leadframes 44 der Fig. 3 und der Fig. 4 unterscheiden sich zwar in ihrem Design, technisch sind sie jedoch funktionsgleich. Der Hauptunterschied zwischen der Fig. 3 und Fig. 4 ist, dass im Leadframe 44 der Fig. 4 mehr Tiebars 50 vorhanden sind.

Nachdem der Herstellungszustand der Fig. 3 erreicht und das passive Filterelement 66 verschaltet ist, können die Bestückinsel 48 mit den darauf getragenen Bauelemente 35, 40 und optional das passive Filterbauelement 66 in an sich bekannter Weise je in einer ersten Schutzmasse 68 beispielsweise aus einem duroplastischen Mold-Compound eingehaust werden. Hierzu kann beispielsweise das sogenannte Molden zum Einsatz kommen, im Rahmen dessen eine duroplastische Kunststoffmasse in einem speziellen Werkzeug um den Schaltungsträger gepresst wird. Als duroplastische Kunststoffmasse kann beispielsweise ein Epoxidharz verwendet werden. Im Allgemeinen sollte ein Material mit Eigenschaften gewählt werden, das nur einen geringen Stress auf die elektrischen Komponenten 35, 40, 66 bei gleichzeitig guter Haftung auf dem Leadframe 44 ausübt.

In der ersten Schutzmasse 68 kann auch ein nicht weiter dargestellter Magnet aufgenommen werden, der beispielsweise als Stützmagnet im Rahmen der Barberpole-Technik verwendet werden kann. Alternativ könnte der Magnet auch nach dem Einhausen in der ersten Schutzmasse 68 auf diese aufgeklebt werden.

Ferner könnten in der ersten Schutzmasse 68 auch nach außen ragende Tragestege aufgenommen beziehungsweise eingemoldet werden. Diese könnten zur Fixierung des Lesekopfes 28 bei der weiteren Herstellung verwendet werden. Die Tragestege stützen den Lesekopf vor allem in Fällen, in denen ein großer Magnet in oder an der ersten Schutzmasse 68 gehalten ist, der zu schwerkraftbedingter Verbiegung führen könnte. Sind die Tragestege aus einem elektrisch leitfähigen Material, sollte darauf geachtet werden, dass diese keinen elektrischen Kontakt zu den elektrischen Bauteilen des Lesekopfes 28 erhalten.

Nach dem Einhausen in der ersten Schutzmasse 68 kann die zusammen mit den Bauelementen 35, 40 eingehauste Bestückinsel 48 partiell durch Auftrennen der entsprechenden Tiebars 50 freigestanzt und so vom Halterahmen 46 getrennt werden. In gleicher Weise können auch die Kontaktanschlüsse 52 partiell freigestanzt werden. Alle anderen Elemente des Lesekopfes 28 bleiben in diesem Herstellungszustand zunächst über die Tiebars 50 mit dem Halterahmen 46 verbunden.

Von dem so partiell freigestanzten Lesekopf 28 können nun die zusammen mit den Bauelementen 35, 40 eingehauste und freigestanzte Bestückinsel 48 sowie die freigestanzten Kontaktanschlüsse 52 in der in Fig. 4 gezeigten Weise optional abgebogen werden. Dabei sind die zusammen mit den Bauelementen 35, 40 eingehauste, freigestanzte und abgebogene Bestückinsel 48 lila oder gepunktet und die freigestanzten und abgebogenen Kontaktanschlüsse lila/orange oder gepunktet dargestellt.

Nach dem Biegevorgang wird der noch partiell am Halterahmen 46 gehaltene Lesekopf 28 in einer Zwischenschutzmasse 70 eingehaust und im Abschluss daran vom Halterahmen 46 vollständig freigestanzt. Das Einhausen im Rahmen eines zuvor beschriebenen Mold-Prozesses erfolgen, bei dem als Material für die Zwischenschutzmasse 70 ebenfalls ein Duroplast verwendet werden kann. Die Zwischenschutzmasse 70 sorgt vor allem für einen stabilen Halt des gebogenen Lesekopfes.

Abhängig vom Lesekopf 28 kann im vollständig im Leadframe 44 gehaltenen Zustand, im partiell freigestanzten Zustand, oder auch im freigestanzten Zustand eine Kalibrierung erfolgen. Ein Freistanzen erst unmittelbar vor der Kalibrierung bringt den Vorteil, dass die Fertigungstoleranzen sehr niedrig und auch sehr reproduzierbar sind. In besonders günstiger Weise sollte das Freistanzen des Lesekopfes 28 im Zwischenproduktionszustand der Fig. 4 auch in zwei Schritten erfolgen. Nach dem ersten Stanzschritt sind die Versorgungs- u. Signalleitungen freigegeben und können elektrisch kontaktiert werden. In diesem Fall kann der Test oder Abgleich/Kalibrierung noch im Leadframe 44 erfolgen, was Vorteile im Handling und in der Positionierung bringt. Erst anschließend erfolgt die vollständige Freistanzung aus dem Halterahmen 46 und ggf. nicht weiter referenzierter Versorgungspins (bevorzugt Ground-Pin) .

Die Traceability des Lesekopfes 28 kann dadurch sichergestellt werden, dass zu Beginn des Fertigungsprozesses eine fortlaufende Seriennummer auf dem Leadframe 44 (z.B. ein Datamatrix-Code) aufgebracht wird. Unter dieser Seriennummer können die Produktionshistorie (Zeitstempel, Anlagennummern, Prozessmesswerte, Kalibrierwerte, Testergebnisse, etc.) und die Seriennummer des Lesekopfes 28 abgespeichert werden. Unmittelbar nach dem Freistanzen kann diese Seriennummer in einem nicht weiter dargestellten nichtflüchtigen Speicher des Lesekopfes 28 abgelegt werden. Zusätzlich kann diese Seriennummer auf der Oberfläche des Lesekopfes 28 in einem beliebigen Zwischenproduktionszustand oder Endzustand des Lesekopfes 28 aufgebracht werden. Im Falle von Reklamationen können betroffene Nummernkreise eingegrenzt und separat behandelt werden. Zusätzlich kann über eine statistische Datenauswertung die Prozess- und Material-Optimierung effektiv betrieben werden.

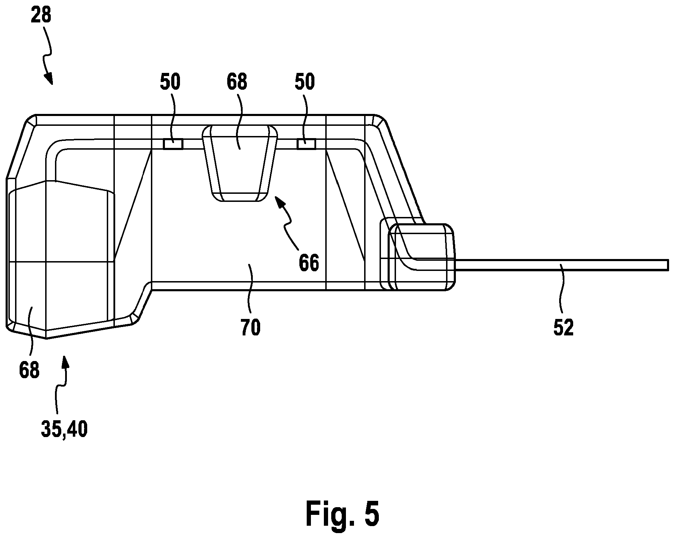

Das Ergebnis nach dem vollständigen Freistanzen ist in Fig. 5 dargestellt. An dieser Stelle sei angemerkt, dass das Einhausen in der Zwischenschutzmasse 70 entfallen kann, wenn der Lesekopf 28 nicht, wie in Fig. 4 gezeigt, an seinem Leadframe 44 gebogen wird.

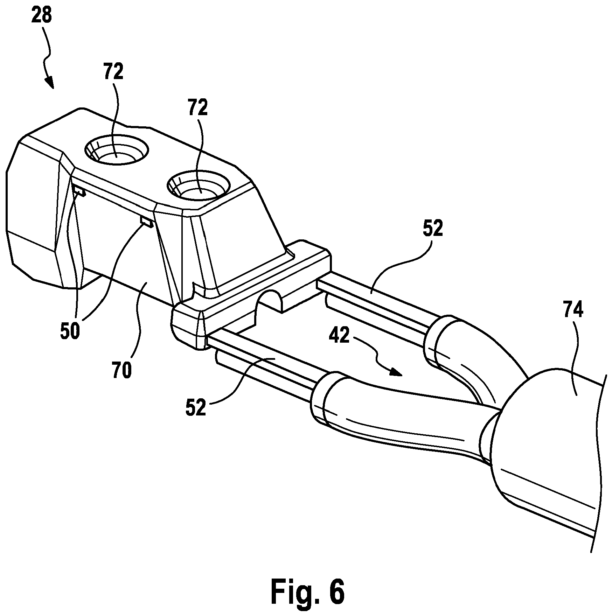

In die Zwischenschutzmasse 70 und/oder optional in die erste Schutzmasse 68 des Lesekopf 28 in dem Herstellungszustand der Fig. 4 und 5 werden in Fig. 6 gezeigte Ausnehmungen 72 oder auch Mulden eingeformt, auf die an späterer Stelle näher eingegangen wird. Die Ausnehmungen 72 können im Rahmen des zuvor genannten Urformprozesses ausgebildet werden. Selbstverständlich können die Ausnehmungen 72 prinzipiell aber auch nachträglich eingeformt werden. Die Ausnehmungen 72 könnten prinzipiell auch im Leadframe 44 beispielsweise als Ösen ausgebildet werden.

Ferner können weitere Konturen für ein sicheres Handling bei der Herstellung vorgesehen werden, wie beispielsweise plane Flächen als Angriffsmöglichkeit für eine Saugdüse oder Konturen für einen Greifer.

Ferner können seitlich am Lesekopf 28 im Zwischenproduktionszustand der Fig. 5 oder 6 Schürzen geformt werden, die eine seitliche Justage, einen Hitzeschutz, einen mechanischen Schutz gegen den Fließdruck der Zwischenschutzmasse 70 und/oder der ersten Schutzmasse 68 und im Falle von eventuell eingebrachten Schlitzen eine Fixierung des Lesekopfes 28 bewirken.

Zur Stabilisierung eventueller Schweißbedingungen kann eine Sicke geprägt werden. Bevorzugt in den Träger-Leadframe. Die Sicke kann die Form einer Rundkuppel oder eines Längssteges aufweisen.

An die Kontaktanschlüsse 52 wird, wie in Fig. 6 dargestellt im Anschluss an das Einhausen mit der Zwischenschutzmasse 70 ein Signalübertragungselement in Form eines Datenkabels 74 angeschlossen. Dies kann in beliebiger Weise, wie Crimpen, Schweißen, Löten, Splicen, Kleben oder dergleichen erfolgen.

Wurde die Zwischenschutzmasse 70 und/oder die erste Schutzmasse 68 gemeldet, kann sich bei Toleranzschwankungen des Materials des Leadframes 44 an einer Dichtkante der Schalen des Mold-Werkzeuges ein sogenannter Flash bilden. Dieser Flash kann mechanisch durch Bürsten oder durch einen Luft-Jet-Strom oder mittels eines Lasers entfernt werden.

Im Anschluss daran wird der Lesekopf 28 in dem Zwischenproduktionszustand der Fig. 6 in einer zweiten Schutzmasse 78 eingehaust. Diese zweite Schutzmasse 78 kann beispielsweise ein Thermoplast sein. Das Einhausen in der zweiten Schutzmasse kann dabei im Rahmen eines Urformprozesses, wie beispielsweise Spritzgießen erfolgen. Hierbei könnte als Material ein Thermoplast wie ein LCP genanntes Flüssigkristallpolymer, ein PPS genanntes Polyphenylensulfid, PA genanntes Polyamid oder PBT genanntes Polybutylenterephthalat eingesetzt werden. Bei der Wahl des Materials stehen ein niedriger Temperaturausdehnungskoeffizient, chemische Beständigkeit, mechanische Festigkeit und Dichtigkeit im Vordergrund. Prinzipiell könnte das Einhausen aber auch im Rahmen eines Moldvorgangs erfolgen und als Material für die zweite Schutzmasse 78 wieder ein Duroplast gewählt werden.

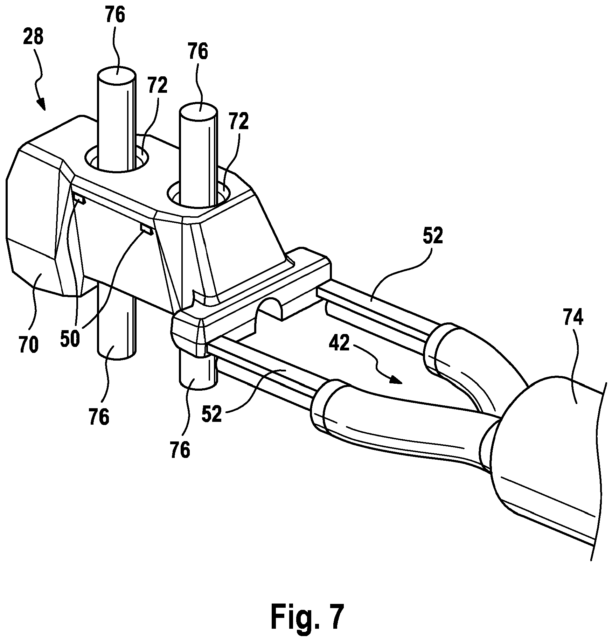

Zum Einhausen in der zweiten Schutzmasse werden, wie in Fig. 7 gezeigt, in die Ausnehmungen 72 Tragestifte 76 eingesetzt, an denen der Lesekopf 28 beim Einhüllen mit der zweiten Schutzmasse 78 gehalten wird. Durch die Tragestifte 76 wird der Sensorkopf 28 beim Einhausen mit der zweiten Schutzmasse 78 nicht nur gestützt sondern auch in einer bestimmten Richtung ausgerichtet. Im Anschluss an das Einhausen werden die Tragestifte 76 wieder entfernt, so dass die Ausnehmungen 72 nicht nur in der Zwischenschutzmasse 70 beziehungsweise ersten Schutzmasse 68 sondern auch in der zweiten Schutzmasse 78 zurückbleiben. Eventuell können zwischen der ersten Schutzmasse 68 respektive der Zwischenschutzmasse 70 und der zweiten Schutzmasse 78 spaltverlängernde Geometrien, wie eine unebene Oberfläche der ersten Schutzmasse 68 respektive der Zwischenschutzmasse 70 ausgebildet werden, um den Weg für in die Ausnehmungen 72 und damit zwischen den aneinander angrenzenden Massen 68, 70, 78 eindringende Feuchtigkeit zu verlängern.

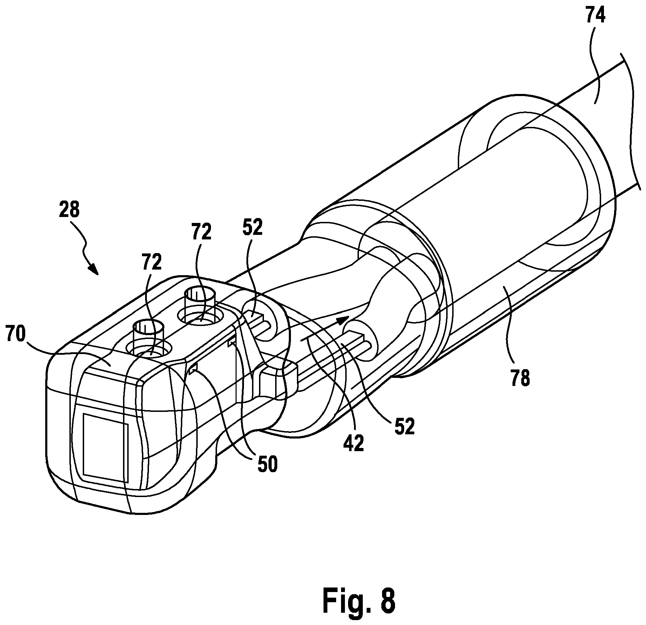

In dem Zwischenproduktionszustand der Fig. 8 ist der Sensorkopf 28 bereits elektrisch voll funktionsfähig und könnte an eine übergeordnete elektronische Einrichtung, wie beispielsweise den Regler 18 angeschlossen werden. Um den Sensorkopf 28 jedoch in dem Fahrzeug 2 zu verbauen, muss noch eine mechanische Schnittstelle geschaffen werden, um den Sensor 2 am Chassis 4 zu befestigen. Diese mechanische Schnittstelle ist jedoch vom Bauraum des Fahrzeuges 2 abhängig. Der Sensorkopf 28 in dem Zwischenproduktionszustand der Fig. 8 kann aus elektrischer Hinsicht prinzipiell in jedem beliebigen Fahrzeug 2 eingesetzt werden und soll daher als sogenanntes Neutralteil bezeichnet werden.

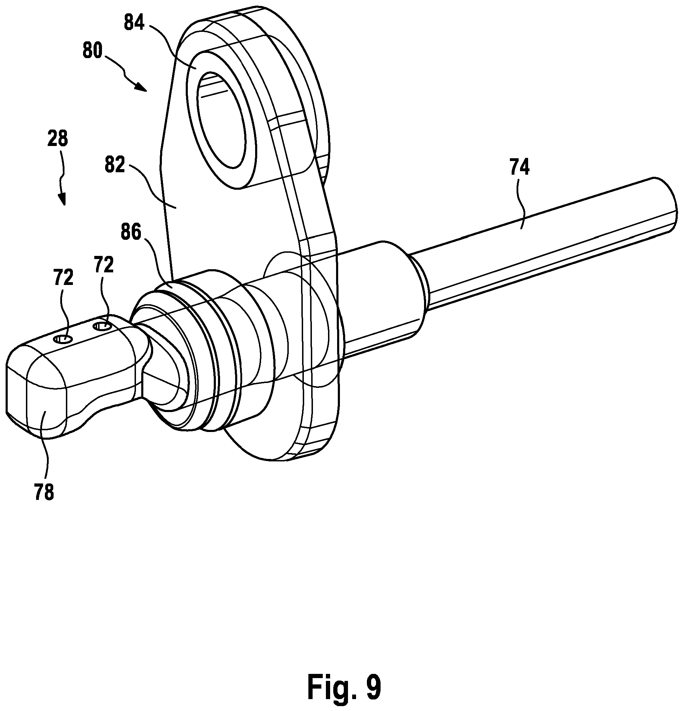

Dieses Neutralteil kann in beliebiger Weise transportiert, gelagert oder vertrieben werden. Im Anschluss lässt es sich in einfacher Weise an den Bauraum des Fahrzeuges 2 durch Hinzufügen einer in Fig. 9 beispielhaft dargestellten mechanischen Schnittstelle 80 an den Bauraum des Fahrzeuges 2 angepasst werden.

Wie in Fig. 9 gezeigt, wird hierzu an das Neutralteil der Fig. 8 eine dritte Schutzmasse 82 durch ein Urformverfahren, wie beispielsweise ein Spritzgussverfahren angeformt. In diese dritte Schutzmasse 82 wird eine Hülse 84 eingeformt, durch die später ein Befestigungsmittel, wie beispielsweise eine Schraube zum Befestigen des Lesekopfes 28 am Fahrzeug 2 geführt werden kann. Ferner kann um die angeformte dritte Schutzmasse 82 eine Schelle 86 gelegt werden, um die den mechanischen Halt der dritten Schutzmasse 82 am Neutralteil der Fig. 8 erhöht.

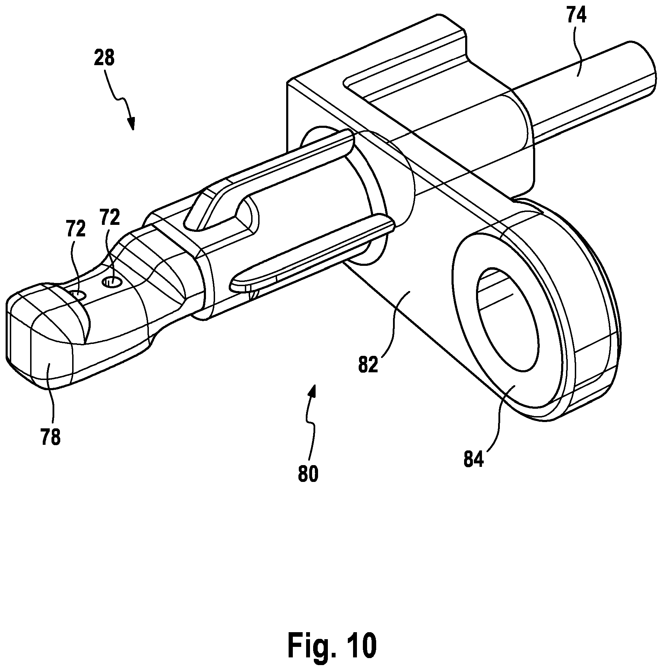

In Fig. 10 ist eine alternative Möglichkeit gezeigt, wie die mechanische Schnittstelle 80 ausgebildet werden kann.

## Patentansprüche

1. Verfahren zum Herstellen eines Sensors (28) mit einem Schaltungsträger (44), der eine eine Sensorschaltung (35, 40) zur Ausgabe eines von einem physikalischen Geberfeld (33) abhängigen Sensorsignals (42) tragende Bestückinsel (48) und eine mit der Bestückinsel (48) elektrisch verbundene Schnittstelle (52) zum Senden des Sensorsignals (42) an eine übergeordnete Signalverarbeitungseinrichtung (18) aufweist, **gekennzeichnet durch**:
- Einhüllen eines die Bestückinsel (48) und die Sensorschaltung (35, 40) enthaltenen Teils des Schaltungsträgers (44) in einer ersten Schutzmasse (68),
- Anschließen eines Signalübertragungselementes (74) an die Schnittstelle (52), und
- Einhüllen wenigstens eines Teils der ersten Schutzmasse (68) und der Schnittstelle (52) mit wenigstens einem Teil des daran angeschlossenen Signalübertragungselementes (74) in einer zweiten Schutzmasse (78), wobei das Einhüllen mittels der ersten Schutzmasse als Molden durchgeführt wird, im Rahmen dessen eine duroplastische Kunststoffmasse, als die erste Schutzmasse, in einem speziellen Werkzeug um den Schaltungsträger gepresst wird, wobei das Signalübertragungselement (74) ein Kabel ist,
- Einhüllen wenigstens eines Teils der zweiten Schutzmasse (78) in einer dritten Schutzmasse (82), wobei das Ausbilden der dritten Schutzmasse (82) mit einem Befestigungsabschnitt (80) zum Befestigen des Sensors (28) an einem Sensorträger (4) ausgeführt wird, wobei der Befestigungsabschnitt (80) eine Hülse (84) umfasst, die radial von der dritten Schutzmasse (82) eingehüllt wird.

2. Sensor (28), mit einem Schaltungsträger (44), wobei der Schaltungsträger (44)eine Sensorschaltung (35, 40) zur Ausgabe eines von einem physikalischen Geberfeld (33) abhängigen Sensorsignals (42) tragende Bestückinsel (48) und eine mit der Bestückinsel (48) elektrisch verbundene Schnittstelle (52) zum Senden des Sensorsignals (42) an eine übergeordnete Signalverarbeitungseinrichtung (18) aufweist, **dadurch gekennzeichnet, dass** der Sensor außerdem
eine erste Schutzmasse (68) aufweist, welche einen die Bestückinsel (48) und die Sensorschaltung (35, 40) enthaltenen Teils des Schaltungsträgers (44) einhüllt,
wobei
ein Signalübertragungselement (74) an die Schnittstelle (52) angeschlossen ist, und
wobei der Sensor eine zweite Schutzmasse (78) aufweist, welche wenigstens einen Teil der ersten Schutzmasse (68) und der Schnittstelle (52) mit wenigstens einem Teil des daran angeschlossenen Signalübertragungselementes (74) einhüllt, wobei das Einhüllen mittels der ersten Schutzmasse als Molden ausgeführt ist, im Rahmen dessen eine duroplastische Kunststoffmasse, als die erste Schutzmasse, in einem speziellen Werkzeug um den Schaltungsträger gepresst ist, wobei das Signalübertragungselement (74) ein Kabel ist,
wobei der Sensor eine dritte Schutzmasse (82) mit einem Befestigungsabschnitt (80) zum Befestigen des Sensors (28) an einem Sensorträger (4) aufweist, wobei der Befestigungsabschnitt (80) eine Hülse (84) umfasst, die radial von der dritten Schutzmasse (82) eingehüllt ist, wobei die dritte Schutzmasse (82) wenigstens einen Teil der zweiten Schutzmasse (78) einhüllt.

## Claims

1. Method for producing a sensor (28) having a circuit carrier (44), which has a placement island (48) carrying a sensor circuit (35, 40) for outputting a sensor signal (42) dependent on a physical transmitter field (33) and an interface (52) which is electrically connected to the placement island (48) and is intended to transmit the sensor signal (42) to a superordinate signal processing device (18), **characterized by**:
- enveloping a part of the circuit carrier (44) containing the placement island (48) and the sensor circuit (35, 40) in a first protective compound (68),
- connecting a signal transmission element (74) to the interface (52), and
- enveloping at least one part of the first protective compound (68) and the interface (52), with at least one part of the signal transmission element (74) connected thereto, in a second protective compound (78), wherein
the enclosing operation by means of the first protective compound is carried out as moulding, during which a thermosetting plastic compound, as the first protective compound, is pressed in a special mould around the circuit carrier, wherein the signal transmission element (74) is a cable,
- enveloping at least one part of the second protective compound (78) in a third protective compound (82), wherein the third protective compound (82) is formed with a fastening section (80) for fastening the sensor (28) to a sensor carrier (4), wherein the fastening section (80) comprises a sleeve (84) which is radially enveloped by the third protective compound (82).

2. Sensor (28) having a circuit carrier (44), wherein the circuit carrier (44) has a placement island (48) carrying a sensor circuit (35, 40) for outputting a sensor signal (42) dependent on a physical transmitter field (33) and an interface (52) which is electrically connected to the placement island (48) and is intended to transmit the sensor signal (42) to a superordinate signal processing device (18), **characterized in that** the sensor also
has a first protective compound (68) which envelopes a part of the circuit carrier (44) containing the placement island (48) and the sensor circuit (35, 40), wherein a signal transmission element (74) is connected to the interface (52), and
wherein the sensor has a second protective compound (78) which envelopes at least one part of the first protective compound (68) and the interface (52), with at least one part of the signal transmission element (74) connected thereto, wherein the enclosing operation by means of the first protective compound is carried out as moulding, during which a thermosetting plastic compound, as the first protective compound, is pressed in a special mould around the circuit carrier, wherein the signal transmission element (74) is a cable,
wherein the sensor has a third protective compound (82) with a fastening section (80) for fastening the sensor (28) to a sensor carrier (4), wherein the fastening section (80) comprises a sleeve (84) which is radially enveloped by the third protective compound (82), wherein the third protective compound (82) envelopes at least one part of the second protective compound (78).

## Revendications

1. Procédé de production d'un capteur (28) qui comprend un support de circuit (44) qui est pourvu d'un îlot d'équipement (48) qui supporte un circuit de capteur (35, 40) destiné à émettre un signal de capteur (42) dépendant d'un champ de transmetteur physique (33) et une interface (52) reliée électriquement à l'îlot d'équipement (48) et destinée à envoyer le signal de capteur (42) à un dispositif de traitement de signal (18) de niveau supérieur, **caractérisé par** les étapes suivantes :
- enrober une partie du support de circuit (44) qui contient l'îlot d'équipement (48) et le circuit de capteur (35, 40) dans un premier composé de protection (68),
- raccorder un élément de transmission de signal (74) à l'interface (52), et
- enrober au moins une partie du premier composé de protection (68) et l'interface (52) avec au moins une partie de l'élément de transmission de signal (74) raccordé à celle-ci dans un deuxième composé de protection (78), l'enrobage étant réalisé au moyen du premier composé de protection par moulage, dans le cadre duquel un composé de matière duroplastique, utilisé comme premier composé de protection, est pressé autour du support de circuit dans un outil spécial, l'élément de transmission de signal (74) étant un câble,
- enrober au moins une partie du deuxième composé de protection (78) dans un troisième composé de protection (82), la formation du troisième composé de protection (82) étant réalisée avec une portion de fixation (80) destinée à fixer le capteur (28) à un support de capteur (4), la portion de fixation (80) comprenant un manchon (84) qui est enrobé radialement par le troisième composé de protection (82).

2. Capteur (28), comprenant un support de circuit (44), le support de circuit (44) étant pourvu d'un îlot d'équipement (48) qui supporte un circuit de capteur (35, 40) destiné à émettre un signal de capteur (42) dépendant d'un champ de transmetteur physique (33) et une interface (52) reliée électriquement à l'îlot d'équipement (48) et destinée à envoyer le signal de capteur (42) à un dispositif de traitement de signal (18) de niveau supérieur, **caractérisé en ce que** le capteur comporte en outre un premier composé de protection (68) qui enrobe une partie du support de circuit (44) qui contient l'îlot d'équipement (48) et le circuit de capteur (35, 40), un élément de transmission de signal (74) étant raccordé à l'interface (52), et le capteur comportant un deuxième composé de protection (78) qui enrobe au moins une partie du premier composé de protection (68) et l'interface (52) avec au moins une partie de l'élément de transmission de signal (74) raccordé à celle-ci, l'enrobage étant réalisé au moyen du premier composé de protection par moulage dans le cadre duquel une matière duroplastique, utilisée comme premier composé de protection, est pressée autour du support de circuit dans un outil spécial, l'élément de transmission de signal (74) étant un câble, le capteur comportant un troisième composé de protection (82) comportant une portion de fixation (80) destinée à fixer le capteur (28) à un support de capteur (4), la portion de fixation (80) comprenant un manchon (84) qui est enrobé radialement par le troisième composé de protection (82), le troisième composé de protection (82) enrobant au moins une partie du deuxième composé de protection (78).
